# EUROPEAN PATENT APPLICATION

(11) **EP 4 628 975 A1**
(43) Date of publication of application: **08.10.2025**
(21) Application number: 23897912.4
(22) Date of filing: 04.12.2023
(51) Int. Cl.: G02C 7/00, G02C 7/10, G02F 1/15

(54) **EYEGLASS LENS AND EYEGLASSES**

(30) Priority: 02.12.2022 JP 2022193602
(71) Applicant: Hoya Lens Thailand Ltd., Pathumthani 12130 (TH)
(72) Inventor: MIYAZAKI, Shigeki, Tokyo 160-8347 (JP); MUKAIYAMA, Hiroyuki, Tokyo 160-8347 (JP)
(74) Representative: Betten & Resch
(86) International application number: PCT/JP2023/043254
(87) International publication number: WO 2024/117266

(57) **Abstract**

Provided are a spectacle lens and related techniques, the spectacle lens having an object side surface and an eyeball side surface and including a light guide component, a first lens element adjacent to the light guide component on the object side, and a second lens element adjacent to the light guide component on the eyeball side, wherein in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and at least any of the first lens element and the second lens element includes an electrochromic laminate.

## Description

### [Technical Field]

The present invention relates to a spectacle lens and spectacles. The present invention relates particularly to a spectacle lens and spectacles pertaining to a system that allows a wearer to experience virtual reality and/or augmented reality and can be attached to a user's head portion. The present invention is applicable to a lens element forming a spectacle lens, and also to a spectacle frame.

### [Background Art]

With respect to virtual reality and augmented reality images and visualization systems, PTL 1 is known. PTL 1 describes that a varifocal optical element capability may be used to provide the perception that light generated from a waveguide is light coming from a specific focal distance to the eyes by changing a focus of a wavefront of the light emerging from the waveguide (reference sign 166 in Fig. 7A).

The applicant has disclosed PTL 2 and PTL 3 for an electrochromic element or laminate to be provided in a spectacle lens. An electrochromic element or laminate (hereinafter referred to as a laminate) in the present specification can refer to the contents of PTL 2 and PTL 3 in their entirety.

### [Citation List]

### [Patent Literature]

[PTL 1] WO 2015/081313
[PTL 2] WO 2022/123915
[PTL 3] WO 2022/085666

### [Summary of Invention]

### [Technical Problem]

The technique described in PTL 1 employs a varifocal lens. On the other hand, in the case of using a varifocal lens, a special lens such as a liquid crystal lens or an electroactive lens is required.

If it were possible to allow a wearer to appropriately experience virtual reality and/or augmented reality while using a non-varifocal lens, which is a material of normal spectacle lenses, the barrier to experiencing virtual reality and/or augmented reality could be further lowered.

The spectacle lenses providing the above experience and spectacles in which the spectacle lenses are fitted into a spectacle frame will be hereinafter also referred to as experience spectacles. The lenses of the spectacles will be hereinafter also referred to as experience lenses.

From the viewpoint of experiencing virtual reality and/or augmented reality, the present inventors have found the following problems.

There are also some commercially available experience spectacles having a function of adjusting a quantity of light incident on an experience lens.

As an example, an experience lens provided with a photochromic layer is known. This experience lens can adjust a transmittance between about 15 to 90% and has a wide dynamic range. In addition, it is easy to process it into a spherical and curved surface shape. On the other hand, a response time at the time of adjusting the transmittance is long. For example, it takes about 20 seconds to change the transmittance from the maximum value of a settable range to an intermediate value thereof, and about 120 seconds to fade from the maximum value of the settable range to an intermediate value. Further, reactivity is likely to be affected by a quantity of ultraviolet rays and a temperature (UV independent and Temperature dependence).

As another example, an experience lens provided with an electronic device configured of liquid crystal is known. With this experience lens, the response time at the time of adjusting the transmittance is short. For example, it takes less than one second (on the order of milliseconds) not only to change the transmittance from the maximum value of the settable range to the intermediate value, but also to fade from the maximum value of the settable range to the intermediate value. In addition, the reactivity is less likely to be affected by the quantity of ultraviolet rays and the temperature. On the other hand, the dynamic range of the transmittance is only about 40% at most. Further, it is not easy to process it into the spherical and curved surface shape.

Places for experiencing virtual reality and/or augmented reality are increasingly spreading all over the world, regardless of outdoors or indoors. From the viewpoint of outdoors or indoors, a wider dynamic range of transmittance is preferred in terms of allowing a wearer to properly experience virtual reality and/or augmented reality.

In this regard, in recent years, the impact of a loading time of a computer game on user satisfaction has become increasingly large. The impact of a loading time at the time of experiencing virtual reality and/or augmented reality is even greater on user satisfaction. For that reason, the response time at the time of adjusting the transmittance should preferably be short. If the response time is long, the user will have to wait until a proper quantity of light is obtained, which will lead to a decrease in satisfaction.

Further, from the viewpoint of countries around the world, it is preferable to reduce the influence of a quantity of ultraviolet light and a temperature on the reactivity

An object of one example of the present invention is to provide a technique that allows a wearer to experience virtual reality and/or augmented reality appropriately and comfortably, regardless of places, using materials of normal spectacle lenses.

### [Solution to Problem]

A first aspect of the present invention is a spectacle lens having
an object side surface and an eyeball side surface and including:
a light guide component; a first lens element adjacent to the light guide component on the object side; and a second lens element adjacent to the light guide component on the eyeball side, wherein
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and
at least any of the first lens element and the second lens element includes an electrochromic laminate.

A second aspect of the present invention is the spectacle lens according to the first aspect, wherein
the electrochromic laminate satisfies at least any of the following.
(1) The electrochromic laminate is disposed on an outermost surface of the first lens element on the object side.
(2) The electrochromic laminate is disposed on an outermost surface of the second lens element on the eyeball side.

A third aspect of the present invention is the spectacle lens according to the first aspect, wherein
the electrochromic laminate has a spherical and curved surface shape.

A fourth aspect of the present invention is the spectacle lens according to the first aspect, wherein
the light guide component has a flat plate shape having two flat surfaces,
the first lens element is a plus lens having a positive power of a reciprocal of a single predetermined distance, and a surface of the plus lens adjacent to the flat surfaces of the light guide component is flat,
the second lens element is a minus lens having a negative power of the reciprocal of the single predetermined distance, and a surface of the minus lens adjacent to the flat surfaces of the light guide component is flat,
the positive power and the negative power have the same absolute value,
the first lens element includes the electrochromic laminate,
the electrochromic laminate includes a support and an electrochromic film laminated on a surface of the support,
the electrochromic film includes a first substrate, a second substrate, and an electrochromic layer interposed between the first substrate and the second substrate,
a material of the first substrate and the second substrate is polycarbonate, and
a material of the first lens element is polycarbonate.

A fifth aspect of the present invention is the spectacle lens according to the first aspect, wherein
the light guide component has a flat plate shape having two flat surfaces,
the first lens element is a plus lens having a positive power of a reciprocal of a single predetermined distance, and a surface of the plus lens adjacent to the flat surfaces of the light guide component is flat,
the second lens element includes a single functional composite lens, a spherical power of the functional composite lens is a value obtained by combining a negative power of the reciprocal of the single predetermined distance and a spherical power of prescription values, and a surface of the functional composite lens adjacent to the flat surfaces of the light guide component is flat,
the positive power and the negative power have the same absolute value, and
the first lens element includes an electrochromic laminate.

A sixth aspect of the present invention is a spectacle lens, wherein
in a case in which a light flux of external light that passes through a lens element is focused to obtain a real image, the lens element realizes prescription values of a wearer, and a virtual image obtained by focusing the light flux of non-external light is displayed at a predetermined distance away from the wearer, and
the lens element includes an electrochromic laminate.

A seventh aspect of the present invention is spectacles, including:
the spectacle lens according to any one aspect of claims 1 to 6; and
a spectacle frame.

Preferred aspects will be described below. Each of the following aspects can be combined with each of the above aspects.

In order to appropriately provide the experience to a wearer with presbyopia, a progressive power lens is required. There is another option of wearing spectacle lenses that provide the experience and spectacles in which the spectacle lenses are fitted into a spectacle frame over the spectacle lenses, which are progressive power lenses already owned by the wearer. The spectacles will also be referred to as experience spectacles below. The spectacle lenses will also be referred to as experience lenses below.

On the other hand, a virtual image obtained by focusing the light flux transmitted in a light guide component is distorted due to the progressive effect of the progressive power lenses already owned by the wearer.

The present inventors have thoroughly studied this point and have conceived the following aspects to allow the wearer to appropriately experience virtual reality and/or augmented reality, regardless of places, using materials of normal spectacle lenses. Aspects according to this finding will be referred to as Aspect Group 1.

Another first aspect of the present invention is a spectacle lens having
an object side surface and an eyeball side surface and including:
a light guide component; a first lens element adjacent to the light guide component on the object side; and a second lens element adjacent to the light guide component on the eyeball side, wherein
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and
the first lens element includes a progressive power lens configured to realize an addition power, which is one of the prescription values of the wearer.

Another second aspect of the present invention is the spectacle lens according to the other first aspect, wherein
the first lens element is the progressive power lens configured to realize the addition power among the prescription values, and
the second lens element realizes prescription values other than the addition power among the prescription values.

Another third aspect of the present invention is the spectacle lens according to the other first aspect, wherein
the light guide component has a flat plate shape having two flat surfaces,
the first lens element includes a single progressive power lens and plus lens, and a surface of the plus lens adjacent to the flat surfaces of the light guide component is flat, and
the second lens element includes a single minus lens, and a surface of the minus lens adjacent to the flat surfaces of the light guide component is flat.

In the case of appropriately providing the experience for refractive errors of eyes, there is still another option of wearing the experience spectacles over spectacle lenses (for example, monofocal lenses) already owned by a wearer. On the other hand, a gap is created between the spectacle lenses already owned by the wearer and the experience lenses. When the gap is created between both lenses, an angle of view at which the wearer can see is reduced.

The present inventors have thoroughly studied this point and have conceived the following aspects to allow the wearer to experience virtual reality and/or augmented reality images appropriately and comfortably, regardless of places, using materials of normal spectacle lenses. Aspects according to this finding will be referred to as Aspect Group 2.

Another fourth aspect of the present invention is a spectacle lens having
an object side surface and an eyeball side surface and including:
a light guide component; a first lens element adjacent to the light guide component on the object side; and a second lens element adjacent to the light guide component on the eyeball side, wherein
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer,
the first lens element includes a plus lens having a positive power of a reciprocal of the single predetermined distance, and
the second lens element includes a single functional composite lens having a power obtained by combining a negative power of the reciprocal of the single predetermined distance and a spherical power that is one of the prescription values.

Another fifth aspect of the present invention is the spectacle lens according to the other fourth aspect, wherein
the light guide component has a flat plate shape having two flat surfaces,
a surface of the plus lens adjacent the flat surfaces of the light guide component is flat, and
a surface of the functional composite lens adjacent to the flat surfaces of the light guide component is flat.

The use of a non-varifocal lens, which is a material of normal spectacle lenses, indicates the use of a material of normal spectacle lenses (for example, a material made of plastic or glass). The presence or absence of a refractive error and its degree differ for each wearer. In addition, a distance at which a virtual image is displayed (which refers to a distance away from a wearer; the same applies below) also differs varies depending on a type of virtual image to be displayed and its display state. The use of one non-varifocal lens indicates that it is not possible to cope with various states of each wearer and virtual image.

The present inventors have thoroughly studied this point and have conceived the following aspects to allow the wearer to experience virtual reality and/or augmented reality images appropriately and comfortably, regardless of places, using materials of normal spectacle lenses. Aspects according to this finding will be referred to as Aspect Group 3.

Another sixth aspect of the present invention is spectacles including a spectacle lens having
an object side surface and an eyeball side surface, the spectacle lens including:
a light guide component; a first lens element adjacent to the light guide component on the object side; and a second lens element adjacent to the light guide component on the eyeball side, in which
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and
a spectacle frame, wherein
at least any of the first lens element and the second lens element is detachable.

A seventh aspect of the present invention is the spectacles according to the sixth aspect, wherein
at least the second lens element is detachable.

An eighth aspect of the present invention is the spectacles according to the sixth or seventh aspect, wherein
the spectacle frame includes at least any of a first lens element holder including a mechanism configured to make the first lens element detachable, and a second lens element holder including a mechanism configured to make the second lens element detachable.

The above aspects may be combined with each other as appropriate.

Other aspects of the present invention will be exemplified below in the case of focusing on the lens elements in each of the above aspect groups. The above aspects may be combined with each other as appropriate for the following aspects.

An eighth aspect of the present invention is a lens element including:
a first lens element that is a single progressive power lens configured to realize an addition power among prescription values and is a plus lens having a predetermined positive power at a progressive starting point; and
a second lens element that is a single minus lens configured to realize prescription values other than the addition power among the prescription values and has a negative power whose absolute value is equivalent to the positive power.

A ninth aspect of the present invention is a lens element including:
a first lens element that is a plus lens having a predetermined positive power; and
a second lens element that is a single functional composite lens having a power obtained by combining a negative power having an absolute value equivalent to the positive power and a spherical power that is one of prescription values.

A tenth aspect of the present invention is the lens element according to the ninth aspect, wherein
the first lens element is a single progressive power lens configured to realize an addition power among the prescription values and is a plus lens having the predetermined positive power at a progressive starting point.

An eleventh aspect of the present invention is the lens element according to any one of the eighth to tenth aspects, wherein
the first lens element having two main surfaces,
the second lens element having two main surfaces, and
one main surface of the first lens element and one main surface of the second lens element are both flat.

A twentieth aspect of the present invention is a lens element, which is
a single functional composite lens having a power obtained by combining a spherical power that is one of prescription values and a negative power of -0.25D or less.

A thirteenth aspect of the present invention is the lens element according to the twentieth aspect, wherein
the lens element includes two main surfaces, one of which is flat.

Other aspects of the present invention will be described below. Each of the above aspects may be combined as appropriate with the following aspects.

The second lens element may realize at least any of a cylinder power other than 0D and a prism power other than 0Δ among the prescription values. In this case, the first lens element may have a positive power of a reciprocal of the single predetermined distance at least at a lens center. In Aspect Group 1, a progressive surface configured to realize the addition power while maintaining the positive power at the lens center may be provided.

In Aspect Group 1, a case in which the first lens element includes the progressive power lens has been described, but another functional lens (for example, a photochromic lens) may be provided together with the progressive power lens or instead of the progressive power lens.

A spectacle frame into which a spectacle lens is fitted, wherein the spectacle lens configured to have an object side surface and an eyeball side surface and include:
a light guide component; a first lens element adjacent to the light guide component on the object side; and a second lens element adjacent to the light guide component on the eyeball side, in which
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and
the spectacle frame includes: at least any of a first lens element holder including a mechanism configured to make the first lens element detachable and a second lens element holder including a mechanism configured to make the second lens element detachable.

A virtual image display system including the above spectacle lens and an image light emission portion configured to emit image light, and a program configured to cause a computer to perform a function provided by the system.

### (Aspect Group 1 In Case of Providing No Electrochromic Laminate for Spectacle Lens)

"A method for manufacturing (or designing) a spectacle lens having an object side surface and an eyeball side surface, the spectacle lens including:
a light guide component; a first lens element adjacent to the light guide component on the object side; and a second lens element adjacent to the light guide component on the eyeball side, in which
the light guide component has a flat plate shape having two flat surfaces,
the first lens element includes a single plus lens, and a surface of the plus lens adjacent to the flat surfaces of the light guide component is flat, and
the second lens element includes a single minus lens, and a surface of the minus lens adjacent to the flat surfaces of the light guide component is flat,
the method including: step 1 of setting a shape of the eyeball side surface of the spectacle lens, which is a surface of the second lens element opposed to the surface adjacent to the flat surfaces of the light guide component, to a curved surface shape having a negative power capable of displaying a virtual image at a single predetermined distance away from a wearer;
step 2 of setting a shape of the object side surface of the spectacle lens, which is a surface of the first lens element opposed to the surface adjacent to the flat surfaces of the light guide component, to a curved surface shape having a positive power whose absolute value is equal to the negative power; and
step 3 of resetting the shape of the object side surface of the spectacle lens, which is the surface of the first lens element opposed to the surface adjacent to the flat surfaces of the light guide component to have an addition power that is one of prescription values of the wearer."

### (Aspect Group 2 In Case of Providing No Electrochromic Laminate for Spectacle Lens)

"A method for manufacturing (or designing) a spectacle lens having an object side surface and an eyeball side surface, the spectacle lens including:
a light guide component; a first lens element adjacent to the light guide component on the object side; and a second lens element adjacent to the light guide component on the eyeball side, in which
the light guide component has a flat plate shape having two flat surfaces,
the first lens element includes a single plus lens, and a surface of the plus lens adjacent to the flat surfaces of the light guide component is flat, and
the second lens element includes a single minus lens, and a surface of the minus lens adjacent to the flat surfaces of the light guide component is flat,
the method including: step 1 of setting a shape of the eyeball side surface of the spectacle lens, which is a surface of the second lens element opposed to the surface adjacent to the flat surfaces of the light guide component, to a curved surface shape having a negative power capable of displaying a virtual image at a single predetermined distance away from a wearer;
step 2 of setting a shape of the object side surface of the spectacle lens, which is a surface of the first lens element opposed to the surface adjacent to the flat surfaces of the light guide component, to a curved surface shape having a positive power whose absolute value is equal to the negative power; and
step 3 of resetting the shape of the surface of the second lens element opposed to the surface adjacent to the flat surfaces of the light guide component to match the negative power and a spherical power that is one of prescription values."

### (Aspect Group 3 In Case of Providing No Electrochromic Laminate to Spectacle Lens)

"A method for manufacturing (or designing) spectacles including a spectacle lens and a spectacle frame, the spectacle lens having an object side surface and an eyeball side surface and including:
a light guide component; a first lens element adjacent to the light guide component on the object side; and a second lens element adjacent to the light guide component on the eyeball side, in which
the light guide component has a flat plate shape having two flat surfaces,
the first lens element includes a single plus lens, and a surface of the plus lens adjacent to the flat surfaces of the light guide component is flat, and
the second lens element includes a single minus lens, and a surface of the minus lens adjacent to the flat surfaces of the light guide component is flat,
the method including:
   step 1 of setting a shape of the eyeball side surface of the spectacle lens, which is a surface of the second lens element opposed to the surface adjacent to the flat surfaces of the light guide component, to a curved surface shape having a negative power capable of displaying a virtual image at a single predetermined distance away from a wearer, and
   step 2 of setting a shape of the object side surface of the spectacle lens, which is a surface of the first lens element opposed to the surface adjacent to the flat surfaces of the light guide component, to a curved surface shape having a positive power whose absolute value is equal to the negative power,
   wherein
   at least any of the first lens element and the second lens element is detachable."

### (In Case of Providing Electrochromic Laminate for Spectacle Lens)

In the case of providing an electrochromic laminate, the manufacturing (or designing) method further includes the following steps.

"Step 4 of providing an electrochromic laminate on at least any of the first lens element and the second lens element"

### [Advantageous Effects of Invention]

According to one example of the present invention, a wearer can experience virtual reality and/or augmented reality appropriately and comfortably, regardless of places, using materials of normal spectacle lenses.

### [Brief Description of Drawings]

[Fig. 1]

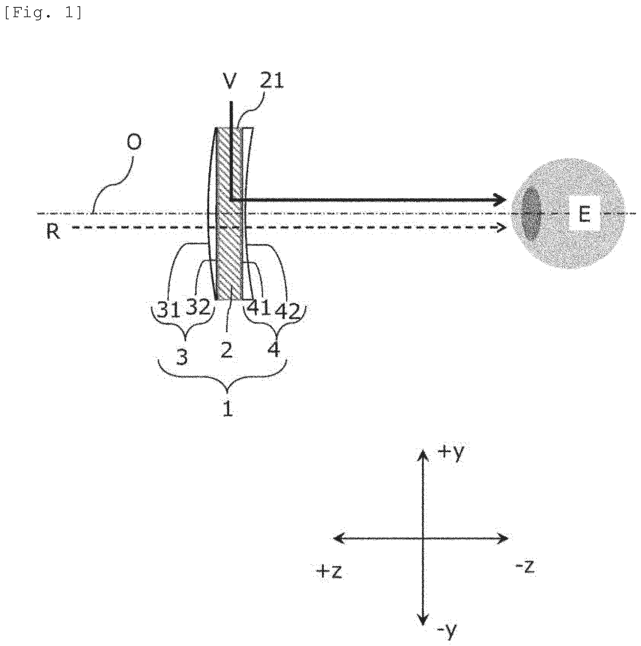

   Fig. 1 is a schematic horizontal cross-sectional view showing that a spectacle lens of one aspect of the present invention functions as a part of a virtual image display system.
[Fig. 2]

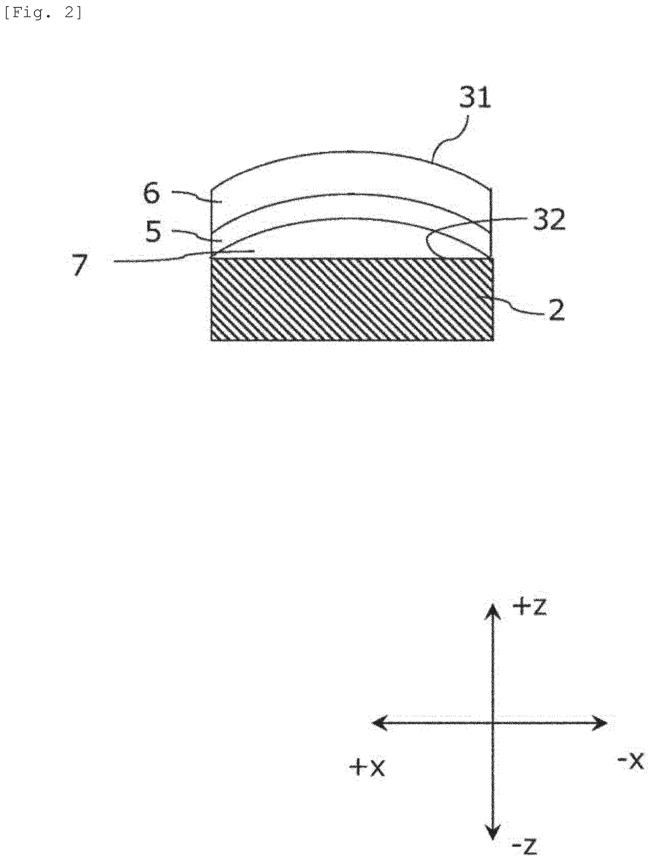

   Fig. 2 is a partial horizontal cross-sectional schematic view of a light guide component and a first lens element of the spectacle lens according to the aspect of the present invention.

### [Description of Embodiments]

One aspect of the present invention will be described below. The term "to" indicates a value equal to or greater than a predetermined numerical value and equal to or less than a predetermined numerical value. Specifications of each sign will be described in the present specification, but their description will be omitted in the text.

### [One Aspect of Present Invention]

One aspect of the present invention relates to a spectacle lens, spectacles and a lens element pertaining to a system that allows a wearer to experience virtual reality and/or augmented reality and can be attached to a user's head portion.

A system according to one aspect of the present invention has an image light emission portion that emits image light, and the following spectacle lens. The image light emission portion indicates a part provided with constituent elements necessary to emit image light, such as a light source and a projection lens. Similarly to a real image, a virtual image is recognized by a wearer when the light flux of image light passes through the wearer's pupil to form an image on the retina. The virtual image is not limited and may be a video or a still image.

This system may be a head-mounted display or may be smart glasses. A case in which the system is smart glasses will be described below. One aspect of the present invention is also a spectacle lens in the smart glasses.

The spectacle lens according to one aspect of the present invention will be described with reference to Fig. 1. Fig. 1 is a schematic horizontal cross-sectional view showing that the spectacle lens of one aspect of the present invention functions as a part of a virtual image display system. Each of reference signs is as described in the description in the section of "Reference Signs List." Description of the reference signs will be omitted in the present specification.

The spectacle lens according to one aspect of the present invention has a see-through function and has an object side surface and an eyeball side surface. The object side surface and the eyeball side surface face each other, a surface portion present to face the object side surface in an optical axis direction when viewed from the object side surface is the eyeball side surface, and conversely, a surface portion present to face the eyeball side surface in the optical axis direction when viewed from the eyeball side surface is the object side surface.

A y direction in the present specification is a direction along the meridian and is a vertical direction. Upward from the lenses in a worn state is defined as a +y direction, and downward from the lenses is defined as a -y direction. An x direction is a direction orthogonal to the meridian and is a horizontal direction. When viewed from a location facing the wearer, rightward from the lenses is defined as a +x direction, and leftward from the lenses is defined as a -x direction. A direction that is orthogonal to the x and y directions and is a lens thickness direction (optical axis direction) is defined as a z direction, a direction toward an object is defined as a +z direction, and a direction toward an eyeball is defined as a -z direction.

Also, one feature of one aspect of the present invention is to replace the varifocal lens in PTL 1 with a non-varifocal lens. For example, since publicly known components may be used for the configurations other than those of the technique relating to optical parts in PTL 1 (specific configurations of a light source, a projection lens, a light guide component (or waveguide), a drive control unit of a system, and the like), their details will be omitted.

The spectacle lens according to one aspect of the present invention includes a light guide component, a first lens element that is adjacent to the light guide component on the object side, and a second lens element that is adjacent to the light guide component on the eyeball side.

The light guide component according to one aspect of the present invention may include a portion having an inside through which the light flux actually passes (also referred to as a waveguide in the present specification), and a portion that covers and protects the waveguide.

The first lens element is adjacent to the light guide component on the object side. The second lens element is adjacent to the light guide component on the eyeball side. As used herein, "adjacent" includes a state of physical contact with the light guide component, and a state of being close thereto but not in contact therewith (for example, a separation distance at a geometric center of a lens is at most 8 mm, 5 mm, or 3 mm).

Both the first lens element and the second lens element are non-varifocal lenses made of plastic or glass. The first lens element and the second lens element may include a hard coat layer, an antireflection layer, an antifouling layer, or the like. Specific examples of "plastic" include polycarbonate and polystirene. Refractive indices of the first and second lens elements may be in the range of 1.53 to 1.67. A material of the first lens element and a material of the second lens element may be the same (for example, both polycarbonate) or different.

The spectacle lens according to one aspect of the present invention has a see-through function. For that reason, when the light flux that passes through the first lens element and the second lens element is focused to obtain a real image, the first lens element and the second lens element realize prescription values of the wearer. The realization of the prescription values of the wearer is achieved by refractive indices and surface shapes of each material of the first lens element and the second lens element.

In addition, a virtual image that is obtained by focusing the light flux that is transmitted in the light guide component and passes through the second lens element is displayed by the second lens element at a single predetermined distance away from the wearer. This single predetermined distance is also referred to as a "display distance."

As shown in Fig. 1, the light flux of the virtual image passes through the second lens element, not the first lens element. For that reason, the second lens element may be set to have a curved surface shape that allows the virtual image to be displayed away from the wearer by the display distance (for example, 2 m). As a specific example, a concave surface with a power of 0.50D (=1/(2 m)) (that is, -0.50D) may be set as the curved surface shape. Along with that, the first lens element may be set to have +0.50D. With this configuration, the wearer without a refractive error can appropriately view the outside world and can appropriately view the virtual image at a distant place by the display distance.

In this regard, prescription values of a wearer are written on a lens bag of spectacle lenses. This is no exception even in the case of including a light guide component as in the spectacle lens according to one aspect of the present invention. This is because, in the spectacle lens according to one aspect of the present invention, refractive errors are corrected in recognition of the outside world, and thus description of the prescription values is required. As a result, even the spectacle lens according to one aspect of the present invention is accompanied by a lens bag.

If there is a lens bag, it is possible to identify the spectacle lens with the lens bag based on the prescription values of the wearer. In addition, spectacle lenses are usually set with a lens bag. For that reason, the technical idea of the present invention is also reflected in spectacle lenses with a lens bag, which is also true for a set of a lens bag and spectacle lenses.

Examples of the prescription values of a wearer may include, for example, a spherical power (S power) in frontal vision (at infinity), a cylinder power (C power), a cylinder axis (Ax), and a prism power (Δ). In the case of a progressive power lens, an addition power (ADD) is also included in addition to the above. In the present specification, the "addition power" is a difference (a positive value in the present specification) between a spherical power in frontal vision (at infinity) and a power required to correct vision in near vision.

The number of lenses forming the first lens element is not limited. The number of lenses forming the second lens element is not limited. On the other hand, since increasing the number of lenses leads to an increase in thickness of the experience lens, it is preferable that the lens forming the first lens element be a single plus lens (having a convex surface as the object side surface) and the lens forming the second lens element be a single minus lens (having a concave surface as the eyeball side surface). Details will be described below.

In the above example, the spectacle lens is such that the object side surface is a convex surface and the eyeball side surface is a concave surface. That is, in the above example, the spectacle lens is a meniscus lens.

Fig. 2 is a schematic partial horizontal cross-sectional view of the light guide component and the first lens element of the spectacle lens according to one aspect of the present invention.

One feature of the spectacle lens (experience lens) according to one aspect of the present invention is that at least any of the first lens element and the second lens element includes an electrochromic laminate.

The electrochromic laminate is a laminate that utilizes the electrochromic phenomenon, which causes a reversible oxidation-reduction reaction by applying a voltage to both electrodes, thereby reversibly changing color. For example, the electrochromic laminate can be used for spectacle lenses and can function as sunglasses in bright places and clear lenses in dark places. It is possible to adjust the brightness to an optimal level by operating a switch or automatically.

The electrochromic laminate has a laminated structure in which an electrochromic film having an electrode layer and an electrochromic layer is laminated on a surface of a support.

The electrochromic laminate is configured to have a support and an electrochromic film laminated on a surface of the support.

The support is required to be transparent and have high transmittance. The support is not limited in its material and is, for example, a moldable resin substrate made of a polycarbonate resin, an acrylic resin, an epoxy resin, a phenolic resin, or the like, a glass substrate, or the like. Among these, the support 1 is preferably made of a polycarbonate resin from the viewpoint of moldability and production costs.

The electrochromic film has a pair of a first substrate and a second substrate, a pair of a first electrode layer and a second electrode layer provided respectively on inner surfaces of the first substrate and the second substrate, and an electrochromic layer provided between the first electrode layer and the second electrode layer. The electrochromic layer is configured to have a reduction layer disposed on the first electrode layer side, an oxidation layer disposed on the second electrode layer side, and an electrolyte layer provided between the reduction layer and the oxidation layer. In this way, in the electrochromic film, the second substrate, the second electrode layer, the oxidation layer, the electrolyte layer, the reduction layer, the first electrode layer, and the first substrate are laminated in order from the bottom.

The substrates forming the electrochromic film are in the form of films or sheets and can be made of the same resin material as the support. Like the support, the substrates are also required to be transparent and have high transmittance. Like the support, the substrates are preferably made of a polycarbonate resin.

Properties required for the electrode layers forming the electrochromic film include transparency, high transmittance, and excellent conductivity. In order to satisfy such properties, the electrode layers are transparent electrode layers, and an indium tin oxide (ITO) is particularly preferably used therefor.

Existing materials can be used for the reduction layer, the oxidation layer, and the electrolyte layer forming the electrochromic layer.

The reduction layer is a layer that develops color as a result of a reduction reaction. Existing reduction-type electrochromic compounds can be used for the reduction layer. The compounds are not limited whether they are organic or inorganic, for example, azobenzene-based compounds, anthraquinone-based compounds, diarylethene-based compounds, dihydroprene-based compounds, dipyridine-based compounds, styryl-based compounds, styrylspiropyran-based compounds, spirooxazine-based compounds, spirothiopyran-based compounds, thioindigo-based compounds, tetrathiafulvalene-based compounds, terephthalic acid-based compounds, triphenylmethane-based compounds, triphenylamine-based compounds, naphthopyran-based compounds, viologen-based compounds, pyrazoline-based compounds, phenazine-based compounds, phenylenediamine-based compounds, phenoxazine-based compounds, phenothiazine-based compounds, phthalocyanine-based compounds, fluoran-based compounds, fulgide-based compounds, benzopyran-based compounds, metallocene-based compounds, tungsten oxides, molybdenum oxides, iridium oxides, titanium oxides, and the like can be exemplified.

The oxidation layer is a layer that develops color as a result of an oxidation reaction. Existing oxidation-type electrochromic compounds can be used for the oxidation layer. The compounds are not limited whether they are organic or inorganic, but can be selected from, for example, compositions containing a radical polymerizable compound including triarylamine, Prussian blue type complexes, nickel oxides, iridium oxides, and the like.

The electrolyte layer has electronic insulation and ionic conductivity, and is preferably transparent. The electrolyte layer may be a solid electrolyte, or in a gel or liquid form. In order to maintain high ionic conductivity, a gel form is preferable. Although not limited, for example, existing electrolyte materials including inorganic ion salts such as alkali metal salts and alkaline earth metal salts, quaternary ammonium salts and acids, and the like can be used.

By employing the electrochromic laminate, the transmittance can be adjusted between about 10% to 90%, and a dynamic range is greatly widened. A response time at the time of adjusting the transmittance is about 5 seconds. It is also easy to process it into a spherical and curved surface shape. Reactivity is less likely to be affected by a quantity of ultraviolet rays and a temperature.

As a result, the one aspect of the present invention allows the wearer to experience virtual reality and/or augmented reality appropriately and comfortably, regardless of places, using materials of normal spectacle lenses.

The electrochromic laminate preferably satisfies at least any of the following.
(1) The electrochromic laminate is disposed on an outermost surface side of the first lens element on the object side.
(2) The electrochromic laminate is disposed on an outermost surface side of the second lens element on the eyeball side.

It is particularly preferable to satisfy (1). This is because the first lens element is used when the wearer views the object in the outside world, and it is convenient that the transmittance is changed in accordance with a level of external light in the outside world and the electrochromic laminate is then disposed on the outermost surface side of the first lens element on the object side.

The "outermost surface side" described in the above paragraph includes the outermost surface of a lens element, and also includes a space between a plastic or glass non-varifocal lens and the outermost surface. As shown in Fig. 2, this also includes a case in which the electrochromic laminate is disposed between the hard coat layer and/or the antireflection layer and the plastic or glass non-varifocal lens (more particularly to come into contact with the hard coat film and/or the antireflection film).

On the other hand, the present invention is not limited to the electrochromic laminate that is located on the outermost surface side. For example, the electrochromic laminate may be disposed away from the light guide component and between the outermost surface side of the first lens element on the object side and the light guide component. That is, a structure in which the electrochromic laminate is embedded in the first lens may be adopted. In other words, a structure in which the electrochromic laminate is sandwiched between the first lens material (for example, polycarbonate) may be adopted.

It is preferable that the electrochromic laminate be sheet-shaped and have the spherical and curved surface shape. When the spectacle lens is a single-vison lens, the outermost surfaces on both the object side and the eyeball side are spherical. In that case, it is preferable that the electrochromic laminate also have a spherical and curved surface shape to conform to shapes of the outermost surfaces. Even in a case in which the spectacle lens is a progressive power lens, if one outermost surface is spherical, it is preferable that the electrochromic laminate have a spherical and curved surface shape to conform to a shape of the outermost surface. It is needless to say that, if the outermost surface is a progressive refractive surface, in order to follow its shape, the electrochromic laminate may have a curved surface shape but may have an aspherical surface shape that deviates from a spherical surface, or may be a toric surface shape.

A thickness of the electrochromic laminate may be 100 µm or more, may be less than 1000 µm, or may be 800 µm or less.

### [Preferred Aspects of Present Invention] <Aspect Group 1>

One of features of Aspect Group 1 is that the first lens element includes a progressive power lens that realizes the addition power, which is one of the prescription values of the wearer.

As described in the section of "Solution," the virtual image obtained by focusing the light flux transmitted through the light guide component is distorted due to the progressive action of the progressive power lenses already owned by the wearer. A countermeasure thereto is to have the above feature of Aspect Group 1. The light flux pertaining to the virtual image does not pass through the first lens element. Focusing on this point, one of the features of Aspect Group 1 is to concentrate a progressive component of the progressive power lens on the first lens element through which the light flux pertaining to the virtual image does not pass. Due to this feature, the virtual image is not distorted due to the progressive action while the wearer's presbyopia can be corrected.

The addition power among the prescription values is preferably realized by the first lens element that is the progressive power lens. In one specific example of Aspect Group 1, the object side surface of the first lens element is formed as a progressive surface, while any of the eyeball side surface of the first lens element, the object side surface of the second lens element, and the eyeball side surface of the second lens element is not formed as a progressive surface. In that case, it can be said that the addition power is realized only by the first lens element (more specifically, the object side surface of the first lens element).

In addition, prescription values other than the addition power among the prescription values is preferably realized by the second lens element. It is needless to say that the prescription values are realized by a combination of the object side surface and the eyeball side surface of the spectacle lens. On the other hand, in one specific example of Aspect Group 1, it is preferable that the object side surface of the first lens element be formed as a progressive surface, while a power of the lens center (which will be described later) of the first lens element be set to a power corresponding to the display distance of the virtual image in every point.

Then, by processing the eyeball side surface of the second lens element into a predetermined shape, the prescription values including the addition power are realized when the light flux serving as external light that has passed through the first lens element and the second lens element is imaged on the wearer's retina and the wearer views the real image. In the present specification, using the shape of the second lens element (in the case of a single lens, its eyeball side surface) to make prescription values other than the addition power among the prescription values reasonable is referred to as "prescription values other than the addition power among the prescription values are realized by the second lens element."

As described in the above paragraph, the first lens element is also indispensable for realizing the prescription values after viewing the real image. On the other hand, in the example described in the present paragraph, the first lens element mainly has the role of realizing the addition power and the role of having a positive power corresponding to the display distance at which the virtual image is placed. For that reason, "the prescription values other than the addition power among the prescription values are realized by the second lens element" may also be expressed as "the first lens element does not have a special contribution that affects the realization of prescription values other than the addition power among the prescription values."

It is needless to say that the values other than the addition power can be realized by the first lens element, but in that case, the progressive power lens serving as the first lens element has a complex surface shape. If such a first lens element is to be prepared as a non-varifocal lens, it may be easier to prepare a varifocal lens in some cases.

For that reason, the first lens element is preferably formed as a progressive power lens that realizes the addition power among the prescription values. Also, processing to reflect the values other than the addition power among the prescription values is easier than reflecting the progressive component. For that reason, there is no problem in processing the second lens element by reflecting the values other than the addition power among the prescription values.

The light guide component preferably has a flat plate shape having two flat surfaces (main surfaces) that face each other in the lens thickness direction. The light guide component can also be curved. It is also possible to curve and form the light guide component into a meniscus shape. However, if a waveguide is curved, it becomes very difficult to control formation of a virtual image. If a surface shape of a portion that covers and protects the waveguide is curved, the light guide component becomes bulky. This leads to an increase in an edge thickness of the spectacle lens. In the case of employing a form of spectacles (smart glasses), an increase in the edge thickness is not desirable. For that reason, the light guide component preferably has a flat plate shape.

The "flat plate shape" in the present specification includes a complete flat plate shape and also includes an incomplete flat plate shape. Regarding the incomplete flat plate shape, a shape in which, for example, a recess is provided in one of the two flat main surfaces at a portion connected to the image light emission portion that emits the image light is also considered as the flat plate shape. As an example, a case in which 50% or more of an area (preferably 80% or more or an area) of each of the two main surfaces of the light guide component is present on the same plane is considered as the flat plate shape.

Then, it is preferable that the first lens element include a single progressive power lens and plus lens, and a surface of the plus lens that is adjacent to the flat surfaces of the light guide component be flat. In addition, it is preferable that the second lens element include a single minus lens, and a surface of the minus lens that is adjacent to the flat surfaces of the light guide component be flat.

When the two main surfaces of the light guide component have curved surface shapes, the surface of the first lens element that is adjacent to the light guide component also needs to have a shape following the curved surface shape. This is because an unintended power is also generated between the first lens element and the light guide component. In that case, one surface of the first lens element needs to be processed to reflect the progressive component, and it is time-consuming to process it into a curved surface shape to conform to the light guide component. In that case, if the light guide component is made into a flat plate shape from the beginning, there is no need to process it into a curved surface shape. The content of the present paragraph also applies to the second lens element.

A specific example assuming a case in which the virtual image is displayed 2 m away while the light guide component is made into a flat plate shape will be exemplified below.

On the object side surface of the first lens element, which is a progressive power lens, a power is set to +0.50D at a measurement reference point F and the lens center (an optical center, a fitting point, or an eye point). A progressive starting point is disposed at the lens center or immediately below it. Then, if the addition power among the prescription values of the wearer with presbyopia is 1.50D, it is set to 2.00D at a near power measurement reference point. The eyeball side surface of the first lens element is flat (plano). That is, the first lens element is a plus lens.

In this regard, positions of the measurement reference point F, a fitting point or eye point FP, and a measurement reference point N can be specified by referring to a remark chart or a centration chart published by a lens manufacturer.

The eyeball side surface of the second lens element has a shape reflecting the prescription values other than the addition power among the prescription values. For example, if the S power of the prescription values is -3.00D and the C power is 0.00D, the surface has a concave shape of -3.50D, which is the sum of -0.50D for displaying the virtual image 2 m away and the S power of -3.00D. The object side surface of the second lens element is flat (plano). That is, the second lens element in this example is a minus lens.

The content described in the section of Aspect Group 1 can be combined with other aspect groups and modified examples as appropriate.

### <Aspect Group 2>

One of features of Aspect Group 2 is that the second lens element has a power obtained by combining a power corresponding to the display distance (-0.50D in the above example) and a spherical power, which is one of the prescription values. That is, one of the features of Aspect Group 2 is that the second lens element is integrated with a lens element that exhibits a function of displaying the virtual image at a predetermined distance and a lens element that exhibits a function of correcting the wearer's refractive error.

As described in the section of "Solution," a gap is formed between the spectacle lens already owned by the wearer and the experience lens. When a gap is generated between both lenses, an angle of view at which the wearer can view is reduced. A countermeasure thereto is to have the above feature of Aspect Group 2. Due to this feature, no gap is formed between both lenses, and the angle of view at which the wearer can view is not reduced.

Specific configurations of Aspect Group 2 are as follows. The first lens element includes a plus lens having a positive power that is a reciprocal of the single predetermined distance. In addition, the second lens element includes a single functional composite lens having a power obtained by combining a negative power that is a reciprocal of the single predetermined distance and a spherical power that is one of the prescription values.

If the specific numerical examples and the example in which the light guide component has the flat plate shape, which are used in Aspect Group 1, are also used in Aspect Group 2, the first lens element includes a plus lens in which the object side surface is +0.50D (the positive power that is the reciprocal of the display distance) and the surface that is the eyeball side surface and is adjacent to the light guide component is 0D (plano). The second lens element includes a single minus lens in which the eyeball side surface has a concave shape of -3.50 D (=-0.50D+(-3.00D)), which is a negative power, and the surface that is the object side surface and is adjacent to the light guide component is 0D (plano).

Also, in the example of the above paragraph, a single minus lens having a negative power obtained by combining the negative power of the reciprocal of the display distance and the spherical power that is one of the prescription values has been exemplified, but the lens is not limited thereto. For example, if the S power of the prescription values is +3.00D, the eyeball side surface will have a convex shape (plus lens) of +2.50D (=-0.50D+3.00D), which is a positive power. In addition, if the S power of the prescription values is +0.50D, the eyeball side surface will be 0D (=-0.50D+0.50D). If light guide component has a flat plate shape, the second lens element will include a single disc-shaped lens as a result. The lens of the second lens element in such a case is collectively called a "functional composite lens."

The content described in the section of Aspect Group 2 can be combined with other aspect groups and modified examples as appropriate.

### <Aspect Group 3>

Aspect Group 3 is an aspect focusing on spectacles (smart glasses). One of features of Aspect Group 3 is that at least any of the first lens element and the second lens element (at least the second lens element, and in some cases both lens elements) is detachable from the spectacles. A case in which both lens elements are detachable from the spectacles will be exemplified below, but only one of both lens elements may be detachable and in particular only the second lens element may be detachable. For that reason, the present invention is not limited to this example.

As described in the section of "Solution," using one non-varifocal lens indicates that it is not possible to cope with various situations for each wearer and virtual image. A countermeasure thereto is to prepare a plurality of types of the first lens elements and the second lens elements.

In the case of employing Aspect Group 1 for the first lens element, the first lens element includes a progressive power lens. That is, there is a need to prepare a plurality of types of progressive power lenses. It is needless to say that the first lens element can also be manufactured after an order for the spectacles (smart glasses) is received, but it is not practical in terms of work efficiency to produce different progressive surfaces for each order. For that reason, it is practical to prepare semi-finished lenses in which a progressive surface with a predetermined addition power is formed on the object side surface in advance.

In the case of preparing semi-finished lenses in which prescription values other than the addition power among the prescription values are also reflected, a number of types of semi-finished lenses need to be prepared in accordance with the number of combinations of prescription values.

On the other hand, in the case of employing Aspect Group 1, fewer types of semi-finished lenses need to be prepared. This is because the progressive power lens in Aspect Group 1 realizes the addition power among the prescription values. If it is the progressive power lens that realizes the addition power, the number of types of semi-finished lenses to be prepared are significantly reduced as compared to when prescription values other than the addition power among the prescription values are also reflected.

If the light guide component has a flat plate shape, the eyeball side surface of the first lens element will also be flat, and if a surface facing a progressive surface of the semi-finished lens is flat, the work of additional processing can be omitted.

In the case of employing Aspect Group 2 for the second lens element, the second lens element includes a single minus lens having a negative power that is obtained by combining a negative power of the reciprocal of the single predetermined distance and a spherical power that is one of the prescription values. In the case of a minus lens, it is easy to process a lens blank using the related art. If the light guide component has a flat plate shape, the object side surface of the second lens element is also flat, making processing even easier.

There is no limitation on specific configurations for making the first lens element and/or the second lens element detachable from the spectacles. A mechanism that allows the first lens element and/or the second lens element to be held and/or detached may be provided for any configuration of the spectacles. This mechanism may be provided for the light guide component, but the light guide component is a precision component even though it is protected, and thus it is not preferable to subject it to shock each time it is attached or detached. For that reason, it is preferable to provide the mechanism for the spectacle frame. The mechanism is preferably provided for a rim of the spectacle frame, which is located close to the spectacle lens.

As a specific example of the above mechanism, for example, a half rim may be used in which a rim is provided only on an upper side of spectacles, and the upper rim may be provided with a groove and a stopper that allow the first lens element and the second lens element, which are located with the light guide component interposed therebetween, to be held and detached while the light guide component is fixed to the rim.

As another specific example of the above mechanism, for example, a full rim may be used in which a rim covering the entire circumferences of spectacle lenses is provided in spectacles, a slot with a lid may be provided in an upper rim, and the first lens element and the second lens element, which are located with the light guide component interposed therebetween, may be inserted into and detached from the slot while the light guide component is fixed to the rim.

### <Modified Examples>

The embodiments of the present invention have been described above, but the above disclosures show exemplary embodiments of the present invention. That is, the technical scope of the present invention is not limited to the above-described exemplary embodiments and can be modified in various ways without departing from the gist of the present invention. In addition, the above disclosures can also be arbitrarily selected and combined with the following modified examples.

In one aspect of the present invention, the case in which the C power is 0.00D has been exemplified, but the present invention is applicable even if the C power is a different value. Specifically, the eyeball side surface of the second lens element may be a toric surface corresponding to the C power and the cylinder axis Ax. In addition, even when the prism power Δ is present as prescription values, a shape corresponding to the prism power Δ may be reflected on the eyeball side surface of the second lens element.

That is, the second lens element may realize at least any of the cylinder power other than 0D and the prism power other than 0Δ among the prescription values. In that case, the first lens element may have a positive power of the reciprocal of the single predetermined distance at least at the lens center. In Aspect Group **1,** it may have a progressive surface that realizes the addition power while maintaining the positive power at the lens center.

In one aspect of the present invention, for ease of description, the technical content has been described to be applicable to the case in which the surface shape of the second lens element is spherical. On the other hand, the surface shape of the second lens element in one aspect of the present invention may be spherical or may be other shapes (for example, a shape corresponding to a toric surface or the prism power Δ).

In Aspect Group 1, the object side surface of the progressive power lens included in the first lens element may be an aspherical progressive surface. The surface of the first lens element that is adjacent to the light guide component (for example, the eyeball side surface of the progressive power lens) and the surface of the second lens element that is adjacent to the light guide component may have a shape conforming to the main surfaces of the light guide component. In addition, the eyeball side surface of the second lens element may have a shape that realizes prescription values other than the addition power among the prescription values and may be spherical or aspherical.

In Aspect Group **2,** the object side surface of the plus lens included in the first lens element may be an aspherical progressive surface as in Aspect Group 1 or may be spherical. The surface of the first lens element that is adjacent to the light guide component (for example, the eyeball side surface of the plus lens) and the surface of the second lens element that is adjacent to the light guide component (for example, the object side surface of the functional composite lens) may have a shape conforming to the main surfaces of the light guide component. In addition, the eyeball side surface of the functional composite lens may be spherical or aspherical as long as it has a power obtained by combining a negative power corresponding to the display distance and a spherical power. Similarly to the second lens element in Aspect Group 1, there is no limitation on the shape of the eyeball side surface of the functional composite lens as long as the prescription values can be made reasonable using the shape of the eyeball side surface of the functional composite lens. In Aspect Group 2, all the prescription values including the addition power may be realized by the functional composite lens.

In Aspect Group 1, the case in which the first lens element includes a progressive power lens has been described, but other functional lenses (for example, a photochromic lens) may be provided together with the progressive power lens or instead of the progressive power lens.

In Aspect Group 1, one of the features is that the first lens element includes a progressive power lens, and there is no need to include the features of Aspect Groups 2 and 3. For example, in Aspect Group 1, the second lens element may include, as separate components, a lens element that exhibits a function of displaying the virtual image at a predetermined distance, and a lens element that exhibits a function of correcting the wearer's refractive error. In addition, the first lens element and/or the second lens element may not be detachable from the spectacles.

Similarly, in Aspect Group 2, there is no need to include the features of Aspect Groups 1 to 3. For example, in Aspect Group 2, the first lens element may not include a progressive power lens, and all the prescription values may be realized by the second lens element. In addition, the first lens element and/or the second lens element may not be detachable from the spectacles.

Similarly, in Aspect Group 3, there is no need to include the features of Aspect Groups 1 and 2.

However, as described in the sections of each aspect group, the configurations of each aspect group provide significant advantages. For that reason, it is preferable to combine the configurations of each aspect group in any manner, and it is more preferable to combine together some or all of the contents described in the sections of each aspect group.

As described in the sections common to Aspect Groups 1 to 3, one feature of one aspect of the present invention is to employ a non-varifocal lens, instead of the varifocal lens in PTL 1. For that reason, the technical idea of the present invention is also reflected in the lens elements employed in each aspect group.

The configuration of the lens element in Aspect Group 1 is as follows.

"A lens element including: a first lens element that is a single progressive power lens configured to realize an addition power among prescription values and a plus lens having a predetermined positive power at a progressive starting point; and
a second lens element that is a single minus lens configured to realize prescription values other than the addition power among the prescription values and has a negative power whose absolute value is equivalent to the positive power."

Also, the "power whose absolute value is equivalent" in the present specification includes a case in which their powers are completely the same, and also includes a case in which the powers are within a tolerance range (for example, ±0.12D) of the spectacle lens.

The configuration of the lens element in Aspect Group 2 is as follows.

"A lens element including: a first lens element that is a plus lens having a predetermined positive power; and

a second lens element that is a single minus lens having a negative power obtained by combining a negative power whose absolute value is equivalent to the positive power and a spherical power which is one of prescription values."

The following configuration is preferably further provided.

"The lens element, wherein the first lens element is a single progressive power lens configured to realize an addition power among the prescription values and a plus lens having a predetermined positive power at a progressive starting point."

In addition to the above configurations, the configuration obtained by reflecting the light guide component having a flat plate shape in the lens element is as follows.

"The lens element, wherein the first lens element has two main surfaces,
the second lens element has two main surfaces, and
one main surface (the eyeball side surface in one aspect of the present invention) of the first lens element and one main surface (the object side surface in one aspect of the present invention) of the second lens element are both flat.

One of the features of Aspect Group 2 is the second lens element. The configuration of the lens element focusing on this is as follows.
"A lens element that is a single minus lens having a negative power obtained by combining a spherical power, which is one of prescription values, and a negative power of -0.25D or less."

Then, the following configuration is preferably further provided.

"The lens element, wherein the lens element has two main surfaces, and one main surface (the object side surface in one aspect of the present invention) is flat."

Aspect Group 3 is also characterized by the spectacle frame including the configuration in which the first lens element and/or the second lens element are made detachable from the spectacles. The configuration focusing on this point is as follows.

"A spectacle frame into which a spectacle lens is fitted, the spectacle lens having an object side surface and an eyeball side surface and including:
a light guide component; a first lens element adjacent to the light guide component on the object side; and a second lens element adjacent to the light guide component on the eyeball side, wherein
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and
the spectacle frame includes at least any of a first lens element holder including a mechanism configured to make the first lens element detachable and a second lens element holder including a mechanism configured to make the second lens element detachable (preferably at least the second lens element holder).

The following specific configurations are also preferred.

"A spectacle lens (or a manufacturing or designing method thereof) having an object side surface and an eyeball side surface and including:
a light guide component; a first lens element adjacent to the light guide component on the object side; and a second lens element adjacent to the light guide component on the eyeball side, wherein
the light guide component has a flat plate shape having two flat surfaces,
the first lens element is a plus lens having a positive power of a reciprocal of a single predetermined distance, and a surface of the plus lens adjacent to the flat surfaces of the light guide component is flat,
the second lens element is a minus lens having a negative power of the reciprocal of the single predetermined distance, and a surface of the minus lens adjacent to the flat surfaces of the light guide component is flat,
the positive power and the negative power have the same absolute value,
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer,
the first lens element includes an electrochromic laminate,
the electrochromic laminate includes a support and an electrochromic film laminated on a surface of the support,
the electrochromic film includes a first substrate, a second substrate, and an electrochromic layer interposed between the first substrate and the second substrate,
materials of the first substrate and the second substrate are polycarbonate, and
a material of the first lens element is polycarbonate."

The following specific configurations reflecting Aspect Group 2 are also preferred.

"The spectacle lens (or manufacturing or designing method thereof), wherein the light guide component has a flat plate shape having two flat surfaces,
the first lens element includes a plus lens having a positive power of a reciprocal of a single predetermined distance, and a surface of the plus lens adjacent to the flat surfaces of the light guide component is flat,
the second lens element includes a single functional composite lens, a spherical power of the functional composite lens is a value obtained by combining a negative power of the reciprocal of the single predetermined distance and a spherical power of the prescription values, and a surface of the functional composite lens adjacent to the flat surfaces of the light guide component is flat,
the positive power and the negative power have the same absolute value, and
the first lens element includes the electrochromic laminate."

The technical idea of the present invention is also reflected in the virtual image display system including the spectacle lens and the image light emission portion that emits image light, and in a program for causing a computer to perform the functions provided by the system.

Other configurations of the present invention are as follows.

"A spectacle lens, wherein in a case in which a light flux of external light that passes through a lens element is focused to obtain a real image, the lens element realizes prescription values of a wearer, and a virtual image obtained by focusing the light flux of non-external light is displayed at a predetermined distance away from the wearer, and
the lens element includes an electrochromic laminate."

In the above configuration, a light guide component is not essential. Instead of the light guide component, a planar waveguide type laser module may be adopted (for example, https://www.tdk.com/ja/featured_stories/entry_022.html). The "the light flux of non-external light" indicates a laser beam when the laser module is used as a light source. The laser beam may be reflected on an eyeball side surface of the lens element (second lens element in the present embodiment) to form a virtual image on the wearer's retina. In that case, the laser module may be controlled so that the image is displayed at a predetermined distance (including the case of only one distance) from the wearer. In addition, while this laser module is used as a light source, the lens element (the first lens element and/or the second lens element in the present embodiment) may include the electrochromic laminate described so far.

The technical idea of the present invention is also reflected in the methods for designing and manufacturing the spectacle lens according to at least any of Aspect Groups 1 to 3 mentioned above. The designing or manufacturing method can also be applied to the case in which the electrochromic laminate is provided for the spectacle lens according to at least any of Aspect Groups 1 to 3 mentioned above. On the other hand, the present invention can also be applied to the case in which an electrochromic laminate is not provided for the spectacle lens according to at least any of Aspect Groups 1 to 3 mentioned above.

Other configurations of the present invention are as follows. The following other configurations can be combined with each other. Also, the contents described so far (particularly, the content described in Aspect Groups 1 to 3, the content relating to the electrochromic laminate, and the above "preferred specific configurations") can be applied to the designing or manufacturing method.

### (Aspect Group 1 In Case of Providing No Electrochromic Laminate for Spectacle Lens)

"A method for manufacturing (or designing) a spectacle lens having an object side surface and an eyeball side surface, the spectacle lens including:
a light guide component; a first lens element adjacent to the light guide component on the object side; and a second lens element adjacent to the light guide component on the eyeball side, in which
the light guide component has a flat plate shape having two flat surfaces,
the first lens element includes a single plus lens, and a surface of the plus lens adjacent to the flat surfaces of the light guide component is flat, and
the second lens element includes a single minus lens, and a surface of the minus lens adjacent to the flat surfaces of the light guide component is flat,
the method including: step 1 of setting a shape of the eyeball side surface of the spectacle lens, which is a surface of the second lens element opposed to the surface adjacent to the flat surfaces of the light guide component, to a curved surface shape having a negative power capable of displaying a virtual image at a single predetermined distance away from a wearer;
step 2 of setting a shape of the object side surface of the spectacle lens, which is a surface of the first lens element opposed to the surface adjacent to the flat surfaces of the light guide component, to a curved surface shape having a positive power whose absolute value is equal to the negative power; and
step 3 of resetting the shape of the object side surface of the spectacle lens, which is the surface of the first lens element opposed to the surface adjacent to the flat surfaces of the light guide component to have an addition power that is one of prescription values of the wearer."

### (Aspect Group 2 In Case of Providing No Electrochromic Laminate for Spectacle Lens)

"A method for manufacturing (or designing) a spectacle lens having an object side surface and an eyeball side surface, the spectacle lens including:
a light guide component; a first lens element adjacent to the light guide component on the object side; and a second lens element adjacent to the light guide component on the eyeball side, in which
the light guide component has a flat plate shape having two flat surfaces,
the first lens element includes a single plus lens, and a surface of the plus lens adjacent to the flat surfaces of the light guide component is flat, and
the second lens element includes a single minus lens, and a surface of the minus lens adjacent to the flat surfaces of the light guide component is flat,
the method including: step 1 of setting a shape of the eyeball side surface of the spectacle lens, which is a surface of the second lens element opposed to the surface adjacent to the flat surfaces of the light guide component, to a curved surface shape having a negative power capable of displaying a virtual image at a single predetermined distance away from a wearer;
step 2 of setting a shape of the object side surface of the spectacle lens, which is a surface of the first lens element opposed to the surface adjacent to the flat surfaces of the light guide component, to a curved surface shape having a positive power whose absolute value is equal to the negative power; and
step 3 of resetting the shape of the surface of the second lens element opposed to the surface adjacent to the flat surfaces of the light guide component to match the negative power and a spherical power that is one of prescription values."

### (Aspect Group 3 In Case of Providing No Electrochromic Laminate to Spectacle Lens)

"A method for manufacturing (or designing) spectacles including a spectacle lens and a spectacle frame, the spectacle lens having an object side surface and an eyeball side surface and including:
a light guide component; a first lens element adjacent to the light guide component on the object side; and a second lens element adjacent to the light guide component on the eyeball side, in which
the light guide component has a flat plate shape having two flat surfaces,
the first lens element includes a single plus lens, and a surface of the plus lens adjacent to the flat surfaces of the light guide component is flat, and
the second lens element includes a single minus lens, and a surface of the minus lens adjacent to the flat surfaces of the light guide component is flat,
the method including:
   step 1 of setting a shape of the eyeball side surface of the spectacle lens, which is a surface of the second lens element opposed to the surface adjacent to the flat surfaces of the light guide component, to a curved surface shape having a negative power capable of displaying a virtual image at a single predetermined distance away from a wearer, and
   step 2 of setting a shape of the object side surface of the spectacle lens, which is a surface of the first lens element opposed to the surface adjacent to the flat surfaces of the light guide component, to a curved surface shape having a positive power whose absolute value is equal to the negative power,
   wherein
   at least any of the first lens element and the second lens element is detachable."

### (In Case of Providing Electrochromic Laminate for Spectacle Lens)

In the case of providing an electrochromic laminate, the manufacturing (or designing) method further includes the following step.

"Step 4 of providing an electrochromic laminate on at least any of the first lens element and the second lens element"

### [Reference Signs List]

- 1: Spectacle lens
- 2: Light guide component
- 21: Side surface (edge)
- 3: First lens element
- 31: Object side surface of first lens element
- 32: Eyeball side surface of first lens element
- 4: Second lens element
- 41: Object side surface of second lens element
- 42: Eyeball side surface of second lens element
- 5: Electrochromic laminate
- 6: Hard coat layer and/or antireflection layer
- 7: Non-varifocal lens made of plastic or glass
- E: Eye
- V: The light flux of virtual image (from image light emission portion)
- R: The light flux of real image (from outside world)
- O: Pupil center and lens center

## Claims

1. A spectacle lens having an object side surface and an eyeball side surface, comprising:
a light guide component; a first lens element adjacent to the light guide component on the object side; and a second lens element adjacent to the light guide component on the eyeball side, wherein
in a case in which a light flux that passes through the first lens element and the second lens element is focused to obtain a real image, the first lens element and the second lens element realize prescription values of a wearer, and a virtual image obtained by focusing the light flux that is transmitted in the light guide component and passes through the second lens element is displayed by the second lens element at a single predetermined distance away from the wearer, and
at least any of the first lens element and the second lens element includes an electrochromic laminate.

2. The spectacle lens according to claim 1, wherein the electrochromic laminate satisfies at least any of the following:
(1) The electrochromic laminate is disposed on an outermost surface side of the first lens element on the object side; and
(2) The electrochromic laminate is disposed on an outermost surface side of the second lens element on the eyeball side.

3. The spectacle lens according to claim 1, wherein the electrochromic laminate has a spherical and curved surface shape.

4. The spectacle lens according to claim 1, wherein
the light guide component has a flat plate shape having two flat surfaces,
the first lens element is a plus lens having a positive power of a reciprocal of a single predetermined distance, and a surface of the plus lens adjacent to the flat surfaces of the light guide component is flat,
the second lens element is a minus lens having a negative power of the reciprocal of the single predetermined distance, and a surface of the minus lens adjacent to the flat surfaces of the light guide component is flat,
the positive power and the negative power have the same absolute value,
the first lens element includes the electrochromic laminate,
the electrochromic laminate includes a support and an electrochromic film laminated on a surface of the support,
the electrochromic film includes a first substrate, a second substrate, and an electrochromic layer interposed between the first substrate and the second substrate,
materials of the first substrate and the second substrate are polycarbonate, and
a material of the first lens element is polycarbonate.

5. The spectacle lens according to claim 1, wherein
the light guide component has a flat plate shape having two flat surfaces,
the first lens element includes a plus lens having a positive power of a reciprocal of a single predetermined distance, and a surface of the plus lens adjacent to the flat surfaces of the light guide component is flat,
the second lens element includes a single functional compound lens, a spherical power of the functional compound lens is a value obtained by combining a negative power of the reciprocal of the single predetermined distance and a spherical power of the prescription values, and a surface of the functional compound lens adjacent to the flat surfaces of the light guide component is flat,
the positive power and the negative power have the same absolute value, and
the first lens element includes the electrochromic laminate.

6. A spectacle lens, wherein
in a case in which a light flux of external light that passes through a lens element is focused to obtain a real image, the lens element realizes prescription values of a wearer, and a virtual image obtained by focusing the light flux of non-external light is displayed at a predetermined distance away from the wearer, and
the lens element includes an electrochromic laminate.

7. Spectacles comprising:
the spectacle lens according to any one of claims 1 to 6;
and
a spectacle frame.
